# EUROPEAN PATENT APPLICATION

(11) **EP 2 080 797 A1**
(43) Date of publication of application: **22.07.2009**
(21) Application number: 09150779.8
(22) Date of filing: 16.01.2009
(51) Int. Cl.: C10L 5/44, C10L 11/04, C10L 11/06

(54) **Boxed firewood**

(30) Priority: 16.01.2008 IT PG20080003
(71) Applicant: Utrio Lanfaloni, Alessio, 06036 Montefalco PG (IT)
(72) Inventor: Utrio Lanfaloni, Alessio, 06036 Montefalco PG (IT)
(74) Representative: Papa, Elisabetta

(57) **Abstract**

The present invention refers to a box containing firewood already positioned therein to be easily ignited in a simple manner, and that can be inserted in a fireplace or used outdoors.

## Description

The use of firewood for heating or cooking still remains a widespread practice in small centres and in the country, owing both to the ease of supply in those areas and the cost, lower than other non-renewable energy sources such as gas oil, gas or coal. Moreover, the presence of a fire in a lit fireplace certainly makes a house more comfortable, especially so in cold wintry days. All this, particularly in a city, is not always viable, due both to the lack of suitable premises for storing firewood and because not everybody can easily light a fire in a fireplace.

Such a problem is solved by a boxed firewood called "*prontofuoco*", subject-matter of the present invention, which solves space problems and any fire-lighting difficulties.

The main advantage underlying the present invention is to give to anybody the chance of lighting with extreme ease a fire with an exclusively ecological boxed firewood, so as to use the resulting charcoals also for barbecues.

Other advantages, features and the operation steps of the present invention will be made apparent in the following detailed description of a preferred embodiment thereof, given by way of example and not for limitative purposes. Reference will be made to the figures of the annexed drawings, wherein:

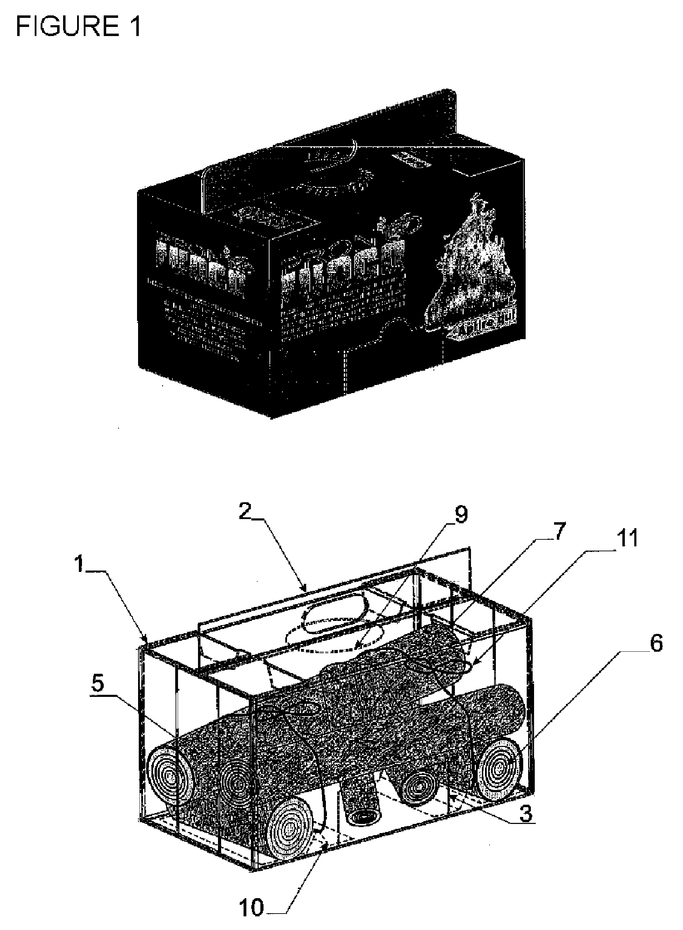

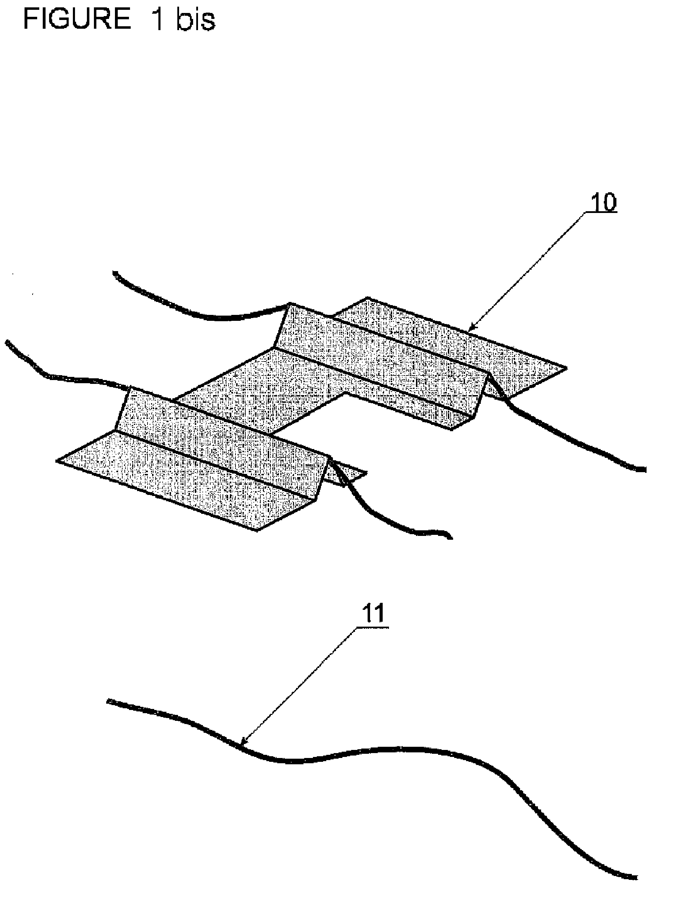

Figure 1 shows two perspective views, one of them being a phantom view of a preferred embodiment of a (packaging) box containing firewood according to the present invention, with sight of the top hole 9 serving as flue, and of the bottom opening 3 where fire-lighting is initiated;
Figure 1bis shows a detail of the blank of the box subject-matter of the present invention;
Figure 2 shows sectional side and top views of the box, in which it is highlighted the specific arrangement of the wood according to the invention; and
Figure 3 shows the operation steps and modes of the box according to the present invention;

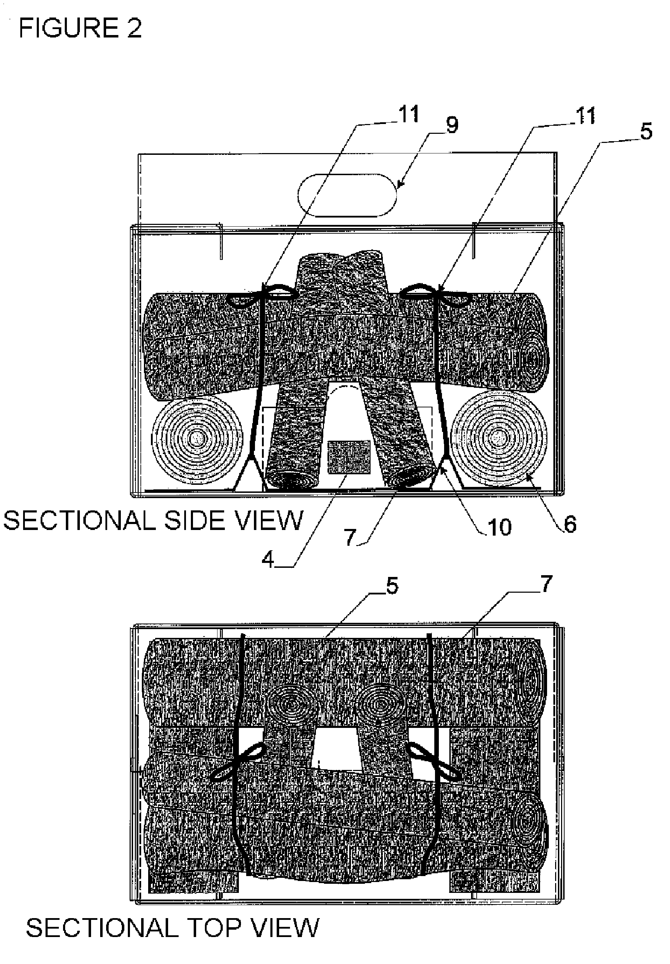

Referring to Figures 1 to 3, the boxed firewood according to the present embodiment, given here by way of example and not for limitative purposes, comprises a packaging box 1 made of an inflammable and ecological material, comprising an exemplary handle 2 for facilitating the transport thereof, a bottom opening 3 from which fire-lighting takes place, an ecological fire-starting brick 4 having, embedded in its tip, a match for lighting a fire, some suitably positioned wood pieces (logs) 5-6, vertically arranged wood sticks 7 for facilitating air circulation, a cardboard disc, which can be removed to access an opening 9 on the top portion of the box, in order to activate a flue-like effect after having lit the fire.

As it is evident from the figures, the box subject-matter of the present invention is easily transportable thanks to the top handle 2.

Upon positioning the box in the fireplace or in any other place suitable for lighting a fire, the cardboard disc covering the flue-like opening 9 is removed, and the edge covering zone 3 is torn off by pulling it outwards, thereby allowing access to the fire-lighting zone.

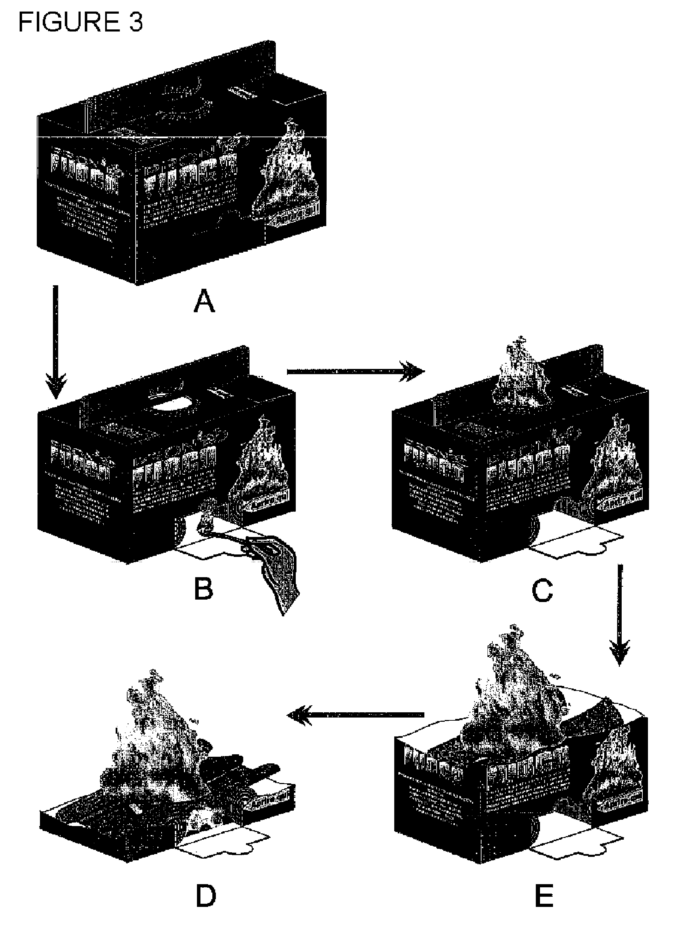

The wood pieces 5-6 inside the box are arranged so as to allow optimum combustion, yet their ignition and the keeping of the flame until all wood present has been consumed is anyhow guaranteed by an array of thinner sticks 7, positioned so as to form a pyramid in order to foster circulation of air entering from zone 3 and exiting through opening 9. Fire-lighting is guaranteed by the ecological fire-starting brick 4, which on one of its corners is coated with the substance with which the matches are provided; therefore, to initiate a flame it will suffice to strike said brick with a suitable abrasive surface. The brick, as soon as it is ignited, should be inserted into the bottom opening 3, where the contact of the flame with the wood will initiate combustion. At ignition, an updraught is readily generated by the bottom 3 and top 9 openings, allowing wood to burn fiercely and, gradually, allowing also consumption of the containing box, in the sequence of steps according to Figure 3.

Lastly, referring to Figure 1bis, it is depicted a string 11 positioned within a recess of a member 10, said string 11 being necessary for tying up a bundle of wood positioned in the box, so that during box moving (transport) for storage and stacking there be obtained the utmost compactness of the erected box

The member 10 is preferably made of cardboard of the same typology of the container, and it is such as not to allow horizontal displacement of the two wood logs positioned transversally in order to support the longitudinal bundle of wood, creating an intake and sufficient space for the positioning of the fire-starting brick.

To the above-described boxed firewood a person skilled in the art, in order to satisfy further and contingent needs, might effect several further modifications and variants, all however comprised within the protective scope of the present invention as defined by the annexed claims.

## Claims

1. A box (1) containing firewood (5, 6, 7) already positioned to be easily ignited in a simple manner, and that can be inserted in a fireplace or used outdoors.

2. The box (1) containing firewood (5, 6, 7) according to claim 1, comprising therein everything necessary for easily lighting a fire, using as flue the same containing box (1) which contributes to a correct combustion of the wood (5, 6, 7) until consumption thereof.

3. The box (1) containing firewood (5, 6, 7) according to one of the preceding claims, comprising therein wood parts (5, 6) positioned pyramid-like in the central portion so as to foster their complete combustion.

4. The box (1) containing firewood (5, 6, 7) according to any one of the preceding claims, wherein all constituent materials thereof are ecological, and therefore no harmful products are generated by their combustion.

5. The box (1) containing firewood (5, 6, 7) according to any one of the preceding claims, **characterised by** having a shape and one or more bottom and top openings (3, 9), generating at ignition an updraught fostering complete combustion of the wood parts (5, 6, 7) contained inside the same containing box (1).
